**Europäisches Patentamt**

**European Patent Office**

**Office européen des brevets**

(19)

(11) Numéro de publication: **0 091 168**
**B1**

(12) ## FASCICULE DE BREVET EUROPEEN

(45) Date de publication du fascicule du brevet:
**25.09.85**

(51) Int. Cl.⁴: **G 02 B 6/26**

(21) Numéro de dépôt: **83200462.6**

(22) Date de dépôt: **31.03.83**

(54) Dispositif de positionnement d'objets filiformes et procedes de positionnement de fibres optiques.

(30) Priorité: **07.04.82 FR 8206078**

(43) Date de publication de la demande:
**12.10.83 Bulletin 83/41**

(45) Mention de la délivrance du brevet:
**25.09.85 Bulletin 85/39**

(84) Etats contractants désignés:
**DE FR GB**

(56) Documents cités:
**FR - A - 2 411 424**

(73) Titulaire: **TELECOMMUNICATIONS
RADIOELECTRIQUES ET TELEPHONIQUES T.R.T.,
88, rue Brillat Savarin, F-75013 Paris (FR)**
(84) Etats contractants désignés: **FR**

(73) Titulaire: **N.V. Philips' Gloeilampenfabrieken,
Groenewoudseweg 1, NL-5621 BA Eindhoven (NL)**
(84) Etats contractants désignés: **DE GB**

(72) Inventeur: **Dumont, François, SOCIETE CIVILE
S.P.I.D. 209 rue de l'Université, F-75007 Paris (FR)**

(74) Mandataire: **Charpail, François et al, Société Civile
S.P.I.D. 209, rue de l'Université, F-75007 Paris (FR)**

ACTORUM AG

## Description

L'invention concerne un dispositif destiné à positionner plusieurs objets filiformes les uns par rapport aux autres, ainsi que des procédés de positionnement de plusieurs fibres optiques à l'aide de ce dispositif.

Dans la technique des fibres optiques, il est souvent nécessaire de positionner plusieurs fibes les unes par rapport aux autres avec une grande précision. C'est le cas par exemple dans certains multiplexeurs-démultiplexeurs en longueur d'onde.

Le multiplexage en longueur d'onde est une technique consistant à faire circuler dans une même fibre optique plusieurs signaux lumineux de longueurs d'onde différentes, modulés chacun indépendamment des autres de façon à augmenter la capacité de transmission de la fibre. La mise en œuvre de cette technique nécessite l'emploi de dispositifs permettant d'injecter dans une même fibre optique la lumière émise par plusieurs émetteurs de longueurs d'onde différentes (multiplexeurs) et également l'emploi de dispositifs permettant d'extraire de la fibre la lumière émise par l'un des émetteurs à l'exclusion de tous les autres (démultiplexeurs). La partie essentielle de ces dispositifs multiplexeurs-démultiplexeurs est un élément dispersif en longueur d'onde: prisme, réseau, lentille non achromatique.

Dans le fonctionnement en démultiplexeur, le faisceau lumineux émis par l'extrémité de la fibre émettrice est collimaté par une lentille collimatrice puis dispersé par l'élément dispersif à la sortie duquel on obtient plusieurs faisceaux émergents distincts envoyés sur une lentille décollimatrice qui donne dans son plan focal plusieurs images monochromatiques ou quasi monochromatiques de l'extrémité de la fibre émettrice. On place les fibres réceptrices de façon que l'extrémité de chacune d'entre elles coïncide avec une des images monochromatiques. On recueille ainsi dans les fibres réceptrices les signaux séparés suivant leur longueur d'onde. Le même dispositif peut réaliser le fonctionnement en multiplexeur si l'on inverse le sens de propagation de la lumière dans chacune des fibres.

Quel que soit le mode de fonctionnement choisi, il est nécessaire de placer les extrémités de chacune des fibres réceptrices en coïncidence avec la position de chacune des images monochromatiques de la fibre émettrice. Le positionnement de chaque fibre doit être assuré avec une précision très élevée. Par exemple, dans le cas de fibres dont le diamètre de cœur mesure 50 μm, la mise en position doit être assurée à quelques microns près.

Parmi les dispositifs connus de positionnement et de raccordement des fibres optiques, le dispositif décrit dans le brevet français N° 2411424 et utilisant les techniques usuelles de gravures des réseaux de diffraction assure un positionnement rigoureux des fibres les unes par rapport aux autres. Il consiste en la réalisation d'une matrice par dépôt métallique mince sur un support plan poli optiquement, des sillons parallèles destinés à recevoir les fibres étant ensuite gravés dans la couche métallique au moyen d'une machine à diamant équipée de systèmes d'asservissement par interférométrie. Bien entendu le prix de revient d'une telle matrice est extrêmement élevé.

Le but de l'invention est de fournir un dispositif de réalisation simple, peu encombrant et peu coûteux assurant avec une grande précision le positionnement de fibres optiques les unes par rapport aux autres. Le dispositif conforme à l'invention est caractérisé en ce qu'il comprend:

— des moyens de positionnement constitués par deux groupes de tiges montées sur un support, parallèles entre elles et groupées par paires suivant plusieurs niveaux légèrement décalés les uns par rapport aux autres, chaque tige ayant une partie lisse munie d'une gorge et une partie filetée traversant respectivement un trou lisse et un trou taraudé percés en regard l'un de l'autre dans ledit support, chaque objet filiforme à positionner reposant dans les gorges d'une paire de tiges de sorte que la rotation desdites tiges provoque un déplacement de l'objet filiforme qu'elles supportent;

— des moyens de fixation des extrémités desdits objets filiformes sur ledit support avec interposition de moyens élastiques permettant de faire reposer chaque objet filiforme dans les gorges avec une légère tension;

— des moyens assurant la translation d'un bloc mobile entre lesdits groupes de tiges dans une direction perpendiculaire à l'ensemble des objets filiformes et les tiges de façon que lesdits objets viennent successivement reposer sur la face supérieure dudit bloc;

— des moyens optiques permettant le contrôle précis de la position des objets filiformes.

La description suivante en regard des dessins annexés, le tout donné à titre d'exemple, fera bien comprendre comment l'invention peut être réalisée.

La fig. 1 représente une vue en perspective d'un premier mode de réalisation du dispositif conforme à l'invention.

Les fig. 2a et 2b représentent respectivement une coupe de la vue en élévation et la vue de dessus du premier mode de réalisation du dispositif conforme à l'invention.

La fig. 3 montre la forme de la gorge pratiquée dans la partie lisse des tiges.

La fig. 4 montre l'ensemble solide dans lequel les fibres optiques sont positionnées suivant le premier mode de réalisation.

La fig. 5 représente une coupe de la vue en élévation d'un second mode de réalisation.

La fig. 6 montre une coupe de la vue en élévation d'une variante du second mode de réalisation.

La fig. 7 montre l'ensemble solide dans lequel les fibres optiques sont positionnées suivant le second mode de réalisation.

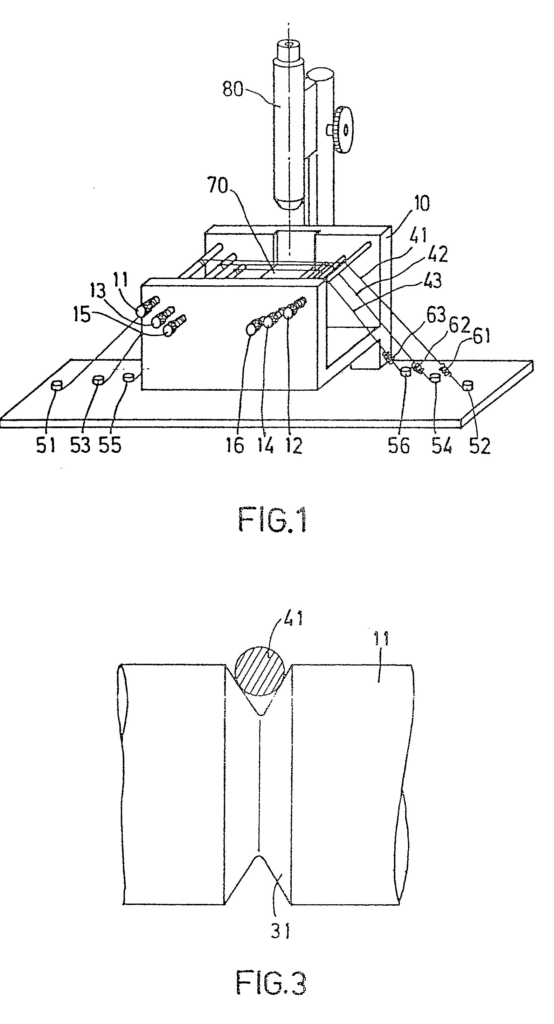

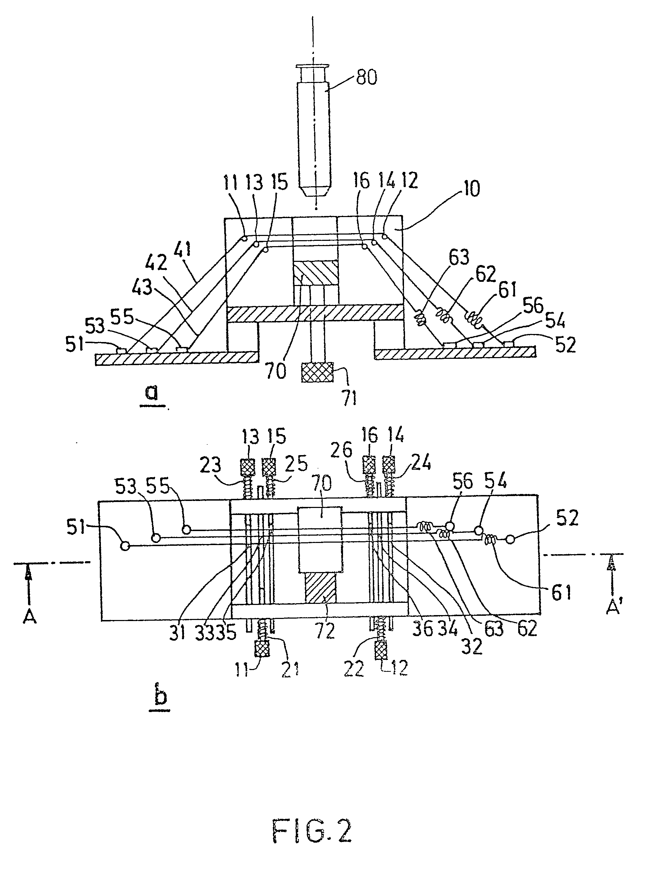

La fig. 1 représente une vue en perspective du dispositif conforme à l'invention dont les différentes vues sont montrées sur la fig. 2.

La fig. 2a est une coupe de la vue en élévation du dispositif suivant le plan vertical dont la trace AA' est indiquée sur la fig. 2b représentant la vue de dessus.

Les éléments correspondants sur les fig. 1 et 2 sont désignés par les mêmes signes de référence.

Les moyens de positionnement des objets filiformes sont constitués par des tiges 11 à 16 qui traversent un support 10 de part en part. Ces tiges sont parallèles entre elles et groupées par paires suivant plusieurs niveaux horizontaux légèrement décalés les uns par rapport aux autres. Le nombre de paires de tiges est égal au nombre d'objets que l'on désire mettre en place. A titre d'exemple, trois objets filiformes (fibres optiques) sont représentés sur les vues des fig. 1, 2a et 2b, mais il est évident que le dispositif selon l'invention permet de positionner un nombre quelconque de fibres. Chacune des tiges 11 à 16 est filetée sur une partie de sa longueur et traverse le support 10 par deux trous, un trou lisse dans lequel pénètre la partie lisse de la tige et un trou taraudé dans lequel pénètre la partie filetée. Les diamètres des trous percés dans le support 10 sont tolérancés avec précision; de plus les tiges sont munies de moyens élastiques 21 à 26 permettant de rattraper le jeu des filetages; enfin les tiges 11 à 16 portent sur leur partie lisse des gorges 31 à 36. Les fibres optiques à positionner 41 à 43 sont disposées de manière que chaque fibre repose dans les gorges creusées dans deux tiges situées à un même niveau. On peut ainsi déplacer chacune des fibres par la rotation des tiges 11 à 16; de plus le déplacement peut être précis: par exemple, si le pas de chacun des filetages portés sur les tiges est de 0,5 mm, une rotation d'une tige de 1/100 t soit 3,6° produit une translation du fil correspondant de 5 µm.

Les fibres 41 à 43 sont fixées par leurs extrémités au socle du support 10 par des moyens de fixation 51 à 56 et maintenues en tension par les moyens élastiques 61 à 63.

Entre les deux groupes de tiges et au-dessous des fibres optiques se trouve un bloc mobile 70 pouvant coulisser verticalement dans une encoche pratiquée dans une partie verticale du support 10, sous l'action par exemple d'une vis 71 traversant la partie horizontale dudit support ou par tout autre dispositif assurant un déplacement vertical progressif dudit bloc. Des moyens élastiques 72, à l'appui d'une autre partie verticale du support 10 parallèle à la précédente, pressent le bloc 70 contre ledit support de façon à lui interdire tout mouvement horizontal. Ainsi lorsque le bloc est déplacé vers le haut, les fibres optiques peuvent venir reposer sur sa face supérieure où elles sont maintenues en position par les moyens élastiques mentionnés ci-dessus.

Enfin un microscope 80 ou tout autre dispositif optique grossissant mobile suivant trois axes permet d'observer les fibres 41 à 43 dans la région centrale de leur partie horizontale. Le microscope 80 est muni d'un oculaire micrométrique qui permet la mesure des distances dans le plan d'observation.

Il faut remarquer que les dimensions des gorges 31 à 36 sont choisies de façon à assurer un guidage précis des fibres 41 à 43, c'est-à-dire que la section de chaque fibre est tangente aux parois de la gorge ainsi qu'il est indiqué sur la fig. 3.

On va maintenant décrire divers procédés de positionnement des fibres au moyen du dispositif conforme à l'invention.

Dans un premier mode de réalisation, les éléments 41 à 43 sont des tronçons de la fibre optique dont on désire assurer le positionnement dans le multiplexeur-démultiplexeur. Ces tronçons de fibre sont maintenus en position dans les plans horizontaux légèrement décalés en hauteur les uns par rapport aux autres. En faisant tourner les tiges 11 et 12 autour de leur axe, on peut déplacer la fibre 41 de façon arbitraire dans un plan horizontal. De même en faisant tourner les tiges 13 et 14 on déplace la fibre 42, etc.

En agissant sur la vis 71, on fait monter le bloc mobile 70 jusqu'à ce qu'il soit très près de la fibre 43 mais sans la toucher. La fibre 43 peut alors être positionnée de façon précise par rapport aux arêtes du bloc 70 en agissant sur les tiges 15 et 16 et en contrôlant la position de la fibre à l'aide du microscope 80. On continue ensuite à faire monter le bloc 70 jusqu'à ce qu'il soit très près de la fibre 42 mais sans la toucher. Les fibres 42 et 43 sont alors vues simultanément dans le microscope 80. En faisant tourner les tiges 13 et 14, on déplace la fibre 42 jusqu'à la rendre parallèle à la fibre 43 et on règle la distance entre les deux fibres 42 et 43 de façon que leur écartement soit égal à la distance qui doit exister entre deux fibres optiques dans le multiplexeur-démultiplexeur. On vérifie le parallélisme et l'écartement des fibres 43 et 42 à l'aide du microscope 80.

On tourne ensuite la vis 71 de façon à faire monter le bloc 70 jusqu'à ce qu'il soit très près de la fibre 41 mais sans la toucher. Au cours de cette opération, le bloc 70 se déplace verticalement, donc le parallélisme et l'écartement des fibres 42 et 43 ne sont pas modifiés.

En faisant tourner les tiges 11 et 12 autour de leur axe, on règle alors le parallélisme et l'écartement de la fibre 41 par rapport aux fibres 42 et 43 à l'aide du microscope 80.

Les positions des fibres ayant été ainsi réglées successivement les unes par rapport aux autres, l'ensemble des fibres 41 à 43 maintenu en tension par l'action des moyens élastiques 61 à 63 repose sur le bloc mobile 70 à la fin de la phase de réglage. Sur ledit bloc mobile, les fibres 41 à 43 sont parallèles entre elles et écartées les unes des autres d'une distance égale à celle qui doit exister dans le multiplexeur-démultiplexeur: ces distances ont des valeurs calculées à priori en fonction des caractéristiques de l'élément dispersif, en fonction de la focale de la lentille décollimatrice et en fonction des différentes longueurs d'onde utilisées dans le multiplex.

Il est à noter que lesdits moyens de positionnement ne conduisent pas nécessairement à rendre les fibres 41 à 43 parallèles entre elles. Si on le désire, certaines des fibres peuvent être positionnées de façon à faire un angle ajustable avec les autres; cependant, on souhaite en général que les fibres soient disposées parallèlement les unes par rapport aux autres.

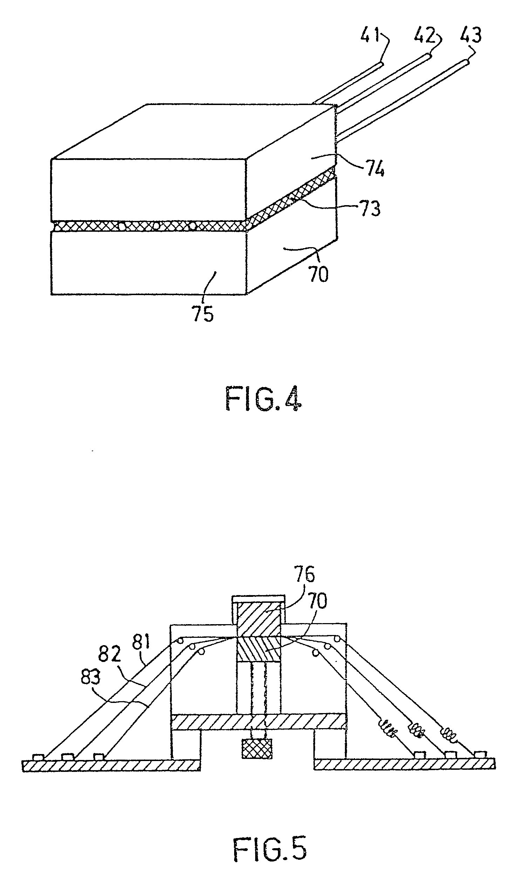

Après avoir positionné comme il vient d'être décrit les tronçons de fibres 41 à 43 sur le bloc mobile 70 reproduit isolé du dispositif sur la fig. 4, on écarte le microscope 80 puis on verse sur la face supérieure du bloc 70 une colle 73 en quantité suffisante pour recouvrir tous les tronçons de fibre. Enfin on ajoute par-dessus l'ensemble un autre bloc 74 de dimensions voisines de celles du bloc 70. Après séchage de la colle, on détache les moyens de fixation 51 à 56 et les moyens élastiques 61 à 63, puis on coupe une des extrémités des fibres 41 à 43 au ras du bloc 70. A la suite de cette opération, on dispose d'un ensemble solide formé des deux blocs 70 et 74 entre lesquels sont emprisonnées par collage les fibres 41 à 43.

Après polissage de la face 75 commune aux blocs 70 et 74 du côté où les fibres ont été sectionnées, on obtient l'ensemble solide de la fig. 4 dans lequel les fibres sont disposées avec des positions identiques à celles qui leur ont été assignées lors de la phase de positionnement. Cet ensemble peut donc être mis en place directement dans le plan focal de la lentille décollimatrice qui équipe le multiplexeur-démultiplexeur.

Dans un second mode de réalisation de l'invention, les objets filiformes sur le dispositif sont des fils faits d'un matériau dur et résistant à l'écrasement et dont le diamètre extérieur est sensiblement égal au diamètre extérieur des fibres optiques dont on désire assurer le positionnement dans le multiplexeur-démultiplexeur.

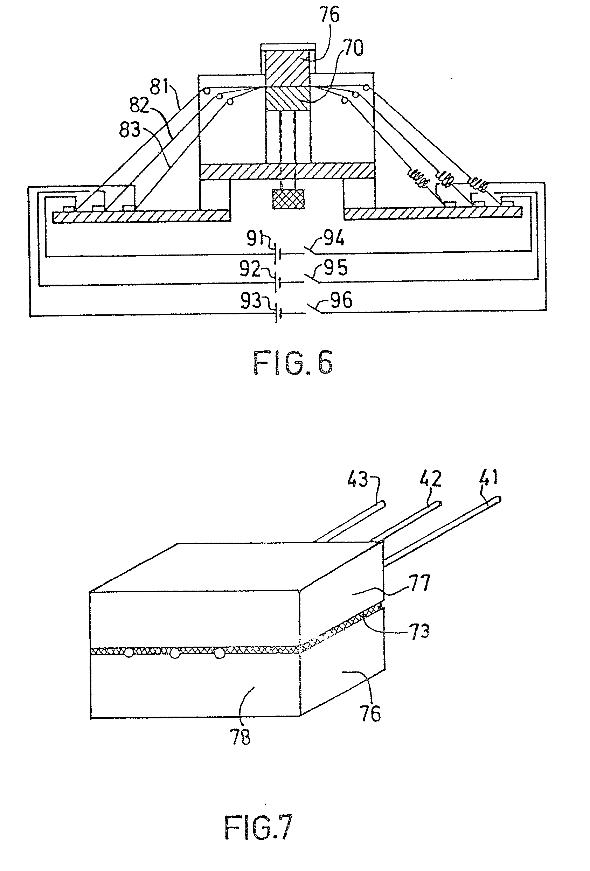

Après avoir positionné les fils de la manière décrite ci-dessus pour les fibres optiques, l'ensemble des fils 81 à 83 repose sur le bloc mobile 70 comme il est indiqué sur la fig. 5 représentant dans cet état la coupe de la vue en élévation du dispositif.

Le microscope 80 ayant été écarté, on presse sur le sommet du bloc mobile 70 un autre bloc 76 fait d'un matériau plastique. La pression exercée doit être suffisante pour imprimer la trace des fils 81 à 83 dans le bloc 76. Après cette opération le bloc 76 présente sur une de ses faces une série de rainures en nombre égal au nombre de fils.

Une variante de ce second mode de réalisation plus facile à mettre en œuvre est celle dans laquelle les fils 81 à 83 sont faits d'un matériau métallique dur (acier, métal réfractaire) tandis que le bloc 70 et les tiges 11 à 16 sont faits d'un matériau dur, électriquement isolant et résistant à la chaleur. Dans ce cas, le bloc 76 peut être avantageusement fait d'un matériau thermoplastique (par exemple: polyméthacrylate de méthyle). La fig. 6 montre alors la vue du dispositif dans l'état où il est représenté sur la fig. 5 avec l'adjonction des générateurs électriques 91 à 93 couplés respectivement aux interrupteurs 94 à 96 pour alimenter en courant l'ensemble des fils. Le bloc 76 est alors pressé contre le sommet du bloc 70 ainsi qu'il est indiqué sur la figure. La fermeture des interrupteurs 94 à 96 fait passer dans les fils 81 à 83 un courant électrique d'une intensité suffisante pour que l'échauffement des fils provoque le ramollissement local du bloc 76 qui après cette opération présente sur une de ses faces une série de rainures en nombre égal au nombre de fils. La profondeur de ces rainures peut être ajustée en réglant la pression exercée sur le bloc 76 au cours de la phase de gravure ainsi que l'intensité et la durée d'application du courant dans les fils 81 à 83.

Après cette opération de pressage, le bloc 76 représenté sur la fig. 7 isolé du dispositif sert de support pour les fibres optiques utilisées dans le multiplexeur-démultiplexeur. Les fibres 41 à 43 sont mises en place dans les rainures du bloc 76 puis un autre bloc 77 de dimensions voisines de celles du bloc 76 est disposé par-dessus l'ensemble et fixé à l'aide d'un collage 73 ou par tout autre moyen de fixation. Après coupure de l'une des extrémités des fibres au ras du bloc 76 et polissage de la face 78 commune aux blocs 76 et 77 du côté où les fibres ont été sectionnées, on obtient l'ensemble solide de la fig. 7 dans lequel les fibres sont positionnées avec des écartements égaux à ceux qui ont été assignés aux fils 81 à 83 lors de la phase de positionnement. Cet ensemble solide peut donc être mis en place directement dans le plan focal de la lentille décollimatrice qui équipe le multiplexeur-démultiplexeur.

## Revendications

1. Dispositif destiné à positionner plusieurs objets filiformes (41-43) les uns par rapport aux autres, caractérisé en ce qu'il comporte:
— des moyens de positionnement constitués par deux groupes de tiges (11, 13, 15; 12, 14, 16) montées sur un support (10), parallèles entre elles et groupées par paires suivant plusieurs niveaux horizontaux légèrement décalés les uns par rapport aux autres, chaque tige ayant une partie lisse munie d'une gorge (31-36) et une partie filetée traversant respectivement un trou lisse et un trou taraudé percés en regard l'un de l'autre dans ledit support (10), chaque objet filiforme à positionner reposant dans les gorges d'une paire de tiges de sorte que la rotation desdites tiges provoque un déplacement de l'objet filiforme qu'elles supportent;
— des moyens de fixation (51-56) des extrémités desdits objets filiformes sur ledit support avec interposition de moyens élastiques (61-63) permettant de faire reposer chaque objet filiforme dans les gorges avec une légère tension;
— des moyens (71) assurant la translation d'un bloc mobile (70) entre lesdits goupes de tiges dans une direction perpendiculaire à l'ensemble des objets filiformes et des tiges de façon que lesdits objets viennent successivement reposer sur la face supérieure dudit bloc;
— des moyens optiques (80) permettant le contrôle précis de la position des objets filiformes.

2. Procédé de positionnement de plusieurs fibres optiques au moyen du dispositif selon la revendication 1, caractérisé en ce que les objets filiformes sont des fibres optiques (41-43), le réglage de positionnement d'une fibre à un niveau quelconque par rapport aux autres fibres, à partir de la fibre (43) située au niveau le plus bas, étant effectué par rotation de chaque tige (15, 16) de la paire correspondante et par contrôle optique (80) dudit positionnement lorsque ledit bloc mobile (70) est amené sans qu'il y ait contact à proximité de ladite fibre à un niveau quelconque, ledit bloc mobile étant ensuite amené au contact de celle-ci, puis amené sans qu'il y ait contact à proximité de la fibre (42) du niveau supérieur suivant dont le positionnement est réglé de la même manière, de sorte qu'en fin de réglage, l'ensemble des fibres optiques positionnées les unes par rapport aux autres et maintenues en tension sous l'action desdits moyens élastiques (61-63) reposent sur la face supérieure du bloc mobile et sont alors recouvertes d'un autre bloc (74) ayant les mêmes dimensions que celles dudit bloc mobile et assemblé avec ce dernier pour maintenir les fibres positionnées dans un unique ensemble solide, lesdites fibres étant ensuite sectionnées au niveau de l'une de leurs faces de sortie dudit ensemble solide et amenées enfin à ce niveau par polissage.

3. Procédé de positionnement de plusieurs fibres optiques à l'aide du dispositif selon la revendication 1, caractérisé en ce que les objets filiformes sont des fils (81-83) en matériau dur, le réglage de positionnement d'un fil à un niveau quelconque par rapport aux autres fils, à partir du fil (83) situé au niveau le plus bas, étant effectué par rotation de chaque tige de la paire correspondante et par contrôle optique dudit positionnement lorsque ledit bloc mobile (70) est amené sans qu'il y ait contact à proximité dudit fil à un niveau quelconque, ledit bloc mobile étant ensuite amené au contact de celui-ci, puis amené sans qu'il y ait contact à proximité du fil (82) du niveau supérieur suivant dont le positionnement est réglé de la même manière, de sorte qu'en fin de réglage, l'ensemble des fils positionnés les uns par rapport aux autres et maintenus en tension sous l'action desdits moyens élastiques repose sur la face supérieure du bloc mobile et est alors pressé entre ledit bloc mobile et un bloc (76) en matériau plastique de façon à imprimer dans ce dernier une série de rainures dans lesquelles les fibres optiques sont ensuite placées et maintenues en position par recouvrement au moyen d'un autre bloc (77) ayant les mêmes dimensions que celles dudit bloc rainuré et assemblé avec ce dernier pour former un unique ensemble solide, lesdites fibres étant ensuite sectionnées au niveau de l'une de leurs faces de sortie dudit ensemble solide et amenées enfin à ce niveau par polissage.

4. Procédé selon la revendication 3, dans lequel lesdits fils en matériau et ledit bloc en matériau plastique sont remplacés respectivement par des fils en matériau métallique dur et par un bloc en matériau thermoplastique, caractérisé en ce que lesdits fils métalliques étant associés à un ou plusieurs générateurs électriques (91-93) sont parcourus par un courant électrique d'intensité suffisante pour les échauffer notablement de façon à imprimer dans ledit bloc en matériau thermoplastique une série de rainures dans lesquelles les fibres optiques sont ensuite placées.

5. Procédé selon l'une des revendications 2 à 4, caractérisé en ce que l'assemblage desdits blocs pour former un unique ensemble solide est obtenu par collage (73).

6. Procédé selon l'une des revendications 2 à 4, caractérisé en ce que l'assemblage desdits blocs pour former un unique ensemble solide est obtenu par pression.

**Patentansprüche**

1. Vorrichtung zum Einstellen mehrerer fadenförmiger Objekte (41-43) in bezug aufeinander, gekennzeichnet durch
. — eine Einstellvorrichtung, die aus zwei Stabgruppen (11, 13, 15; 12, 14, 16) auf einem Träger (10) in paralleler Anordnung und in paarweiser Gruppierung auf mehreren horizontalen und in bezug aufeinander etwas verschobenen Ebenen besteht, wobei jeder Stab einen gewindefreien Teil mit einer Rille (31-36) und einen Gewindeteil besitzt, und diese Teile durch eine gewindefreie Öffnung und eine Gewinde-Öffnung durchgeführt sind, die im Träger (10) einander gegenüber angebracht sind, wobei sich jeder fadenförmiger Objekt derart in den Rillen eines Stabpaares lagert, dass die Drehung der Stäbe zu einer Verschiebung des von ihnen getragenen fadenförmigen Objekts führt;
— Befestigungsmittel (51-56) zum Befestigen der Enden der fadenförmigen Objekte auf dem Träger mit der Zwischenstellung elastischer Mittel (61-63), die es für jedes fadenförmige Objekt ermöglichen, mit geringer Spannung in den Rillen zu lagern;
— Translationsmittel (71) für die Translation eines beweglichen Blocks (70) zwischen den Stabgruppen in einer Richtung senkrecht zur Gesamtheit der fadenförmigen Objekte und der Stäbe, derart dass die Objekte sukzessive auf der Oberfläche des Blocks aufliegen, und
— optische Mittel (80), die die genaue Steuerung der Lage der fadenförmigen Objekte ermöglichen.

2. Verfahren zum Einstellen optischer Fasern mit der Vorrichtung nach Anspruch 1, dadurch gekennzeichnet, dass die fadenförmigen Objekte optische Fasern (41-43) sind, wobei die Einstellung der Position einer Faser auf eine beliebige Ebene in bezug auf die anderen Fasern mit der Faser (43) auf der niedrigsten Ebene anfängt und durch die Drehung jedes Stabes (15, 16) des entsprechenden Paares und durch die optische Steuerung (80) der Einstellung erfolgt, wenn der bewegliche Block (70) in der Nähe der Faser ohne Berührung dieser Faser auf eine beliebige Ebene und anschliessend in Berührung mit dieser Faser gebracht wird, wonach er in der Nähe der Faser (42) auf die folgende höhere Ebene gebracht wird, deren Einstellung auf gleiche Weise erfolgt derart, dass am Ende der Einstellung alle in bezug aufeinander eingestellten optischen Fasern durch die elastischen Mittel (61-63) in gespanntem Zustand gehalten werden und auf der oberen Fläche des beweglichen Blocks aufliegen, der darauf mit einem anderen Block (74) mit gleichen Abmessungen des beweglichen Blocks abgedeckt und damit kombiniert wird, um die Fasern in einer festen Anordnung an ihrem Platz zu halten, wobei diese Fasern anschliessend an einer ihrer Stirnflächen der festen Anordnung abgeschnitten werden und schliesslich in einem Poliervorgang auf gleicher Ebene gebracht werden.

3. Verfahren zum Einstellen mehrerer optischer Fasern mit Hilfe der Vorrichtung nach Anspruch 1, dadurch gekennzeichnet, dass die fadenförmigen Objekte Drähte (81-83) aus einem harten Material sind, wobei die Einstellung der Position eines Fadens auf beliebigen Ebene in bezug auf die anderen Drähte mit dem Draht (83) auf der niedrigsten Ebene anfängt und durch Drehung jedes Stabes des entsprechenden Paares und durch optische Steuerung der Einstellung erfolgt, wenn der bewegliche Block (70) in der Nähe des Drahtes auf eine beliebige Ebene ohne Berührung dieses Drahtes und anschliessend mit diesem Draht in Berührung gebracht wird, darauf in der Nähe des Drahtes (82) auf die folgende höhere Ebene gebracht wird, deren Einstellung auf gleiche Weise erfolgt derart, dass am Ende der Einstellung alle in bezug aufeinander eingestellten Drähte durch die elastischen Mittel in gespanntem Zustand gehalten werden und auf der oberen Fläche des beweglichen Blocks aufliegen und darauf zwischen dem beweglichen Block und einem Block (76) aus einem Kunststoff derart angedrückt werden, dass in den letztgenannten Block eine Reihe von Rillen eingedrückt wird, in die die optischen Fasern aufgenommen und durch Abdeckung dieser Fasern mit einem anderen Block (77) mit den gleichen Abmessungen wie die der mit Rillen versehenen Block in dieser Lage gehalten werden, wonach die Blöcke zur Bildung einer einfachen festen Anordnung zusammengefügt werden, wobei die Fasern auf der Ebene einer ihrer Stirnflächen der festen Anordnung abgeschnitten werden und schliesslich durch einen Poliervorgang auf gleicher Ebene gebracht werden.

4. Verfahren nach Anspruch 3, in dem die Drähte aus hartem Material und der Block aus Kunststoff durch Drähte aus hartem metallischem Material bzw. durch einen Block aus thermoplastischem Material ersetzt sind, dadurch gekennzeichnet, dass die metallischen Drähte, die mit einem oder mehreren elektrischen Stromgeneratoren (91-93) verbunden sind, von einem elektrischen Strom ausreichender Grösse für eine derartige Erhitzung durchflossen werden, dass in den Block aus thermoplastischem Material eine Reihe von Rillen eingepresst werden kann, in die anschliessend die optischen Fasern aufgenommen werden.

5. Verfahren nach einem oder mehreren der Ansprüche 2 bis 4, dadurch gekennzeichnet, dass die Zusammenfügung der Blöcke mit Hilfe eines Klebstoffes (73) verwirklicht wird.

6. Verfahren nach einem oder mehreren der Ansprüche 2 bis 4, dadurch gekennzeichnet, dass die Zusammenfügung der Blöcke unter Druck verwirklicht wird.

## Claims

1. A device for positioning several thread-like objects (41-43) with respect to each other, characterized in that it comprises:
— positioning means constituted by two groups of pins (11, 13, 15; 12, 14, 16) which are mounted on a support (10), which are parallel to each other and which are grouped pairwise according to several horizontal levels slightly offset with respect to each other, each pin having a non-threaded part provided with a groove (31-36) and a threaded part, which parts pass through a non-threaded hole and a threaded hole, respectively, formed opposite each other in the said support (10), each thread-like object to be positioned bearing in the grooves of a pair of pins so that the rotation of the said pins leads to a displacement of the thread-like object supported thereby;
— means (51-56) for fixing the ends of the said thread-like objects on the said support with the interposition of elastic means (61-63) which render it possible for each thread-like object to bear in the grooves with a small amount of tension;
— means (71) ensuring the translation of a movable block (70) between the said groups of pins in a direction at right angles to the assembly of the thread-like objects and the pins so that the said objects successively bear on the upper surface of the said block;
— optical means (80) which permit of accurately controlling the position of the thread-like objects.

2. A method of positioning several optical fibres by means of the device claimed in Claim 1, characterized in that the thread-like objects are optical fibres (41-43), the adjustement of the position of a fibre at an arbitrary level with respect to the other fibres starting with the fibre (43) situated at the lowest level being effected by rotation of each pin (15, 16) of the corresponding pair and by optical control (80) of the said positioning when the said movable block (70) is brought close to the said fibre at an arbitrary level without being in contact with it, the said movable block then being brought into contact with this fibre, after which it is brought close to the fibre (42) at the following upper level whose positioning is controlled in the same manner without being in contact with it so that at the end of the adjustment the assembly of the optical fibres positioned with respect to each other and kept in the tensioned state under the influence of the said elastic means (61-63) bears on the upper surface of the movable block and is then covered by another block (74) of the same dimensions as the said movable block and joined to the latter in order to keep the fibres in place in a single rigid assembly, the said fibres then being cut at the level of one of the end surfaces of the said rigid assembly and finally brought flush with this level by polishing.

3. A method of positioning several optical fibres by means of the device claimed in Claim 1, characterized in that the thread-like objects are wires (81-83) of a hard material, the adjustment of the position of a wire at an arbitrary level with respect to the other wires, starting with the wire (83) situated at the lowest level, being effected by rotation of each pin of the corresponding pair and by optical control of the said positioning when the said movable block (70) is brought close to the said wire at an arbitrary level without being in contact with it, the said movable block then being brought into contact with this wire, after which it is brought close to the wire (82) at the following upper level whose positioning is adjusted in the same manner without being in contact with it so that at the end of the adjustment the assembly of wires positioned with respect to each other and kept in the tensioned state under the influence of the said elastic means bears on the upper surface of the movable block and is then pressed between the said movable block and a block (76) of a plastic material so that a series of grooves pressed into the latter, in which the optical fibres are then disposed and held in place by covering them with another block (77) of the same dimensions as the said block provided with grooves and joined with the latter to form a single rigid assembly, the said fibres then being cut at the level of one of the end surfaces of the rigid assembly and finally brought flush with this level by polishing.

4. A method as claimed in Claim 3, in which the said wires of a hard material and the said block of plastic material are replaced by wires of hard metallic material and a block of thermoplastic material, respectively, characterized in that the said metallic wires, which are associated with one or several electric current generators (91-93) are traversed by an electric current of a sufficient intensity to heat them such that a series of grooves is pressed into the said block of thermoplastic material, in which the optical fibres are then disposed.

5. A method as claimed in any one of Claims 2 to 4, characterized in that a single rigid assembly of the said blocks is obtained by means of an adhesive (73).

6. A method as claimed in any one of Claims 2 to 4, characterized in that a single rigid assembly of the said blocks is obtained by pressure.

**FIG.1**

**FIG.3**

FIG. 2

FIG.4

FIG.5

FIG.6

FIG.7